# EUROPÄISCHE PATENTSCHRIFT

(11) **EP 2 790 304 B1**
(45) Veröffentlichungstag und Bekanntmachung des Hinweises auf die Patenterteilung: **03.11.2021**
(21) Anmeldenummer: 14002372.2
(22) Anmeldetag: 23.09.2011
(51) Int. Cl.: H02K 13/04, H02K 23/56, H02K 1/30, H02K 13/10, H02K 13/00

(54) **Gleichstromelektromotor mit flexiblem Rotoraufbau sowie Verfahren zu dessen Herstellung**
DC motor with flexible rotor construction and manufacturing process
Moteur à courant continu avec un rotor comprenant une construction flexible et procédé de production associé

(30) Priorität: 25.10.2010 DE 102010049524
(43) Veröffentlichungstag der Anmeldung: 15.10.2014
(62) Teilanmeldung aus: 11764476.5
(73) Patentinhaber: maxon international ag, 6072 Sachseln (CH)
(72) Erfinder: Teimel, Arnold, 6074 Giswil (CH); Triponez, Yves, 5643 Sins (CH); Mitterbäck, Peter, 6052 Hergiswil (CH)
(74) Vertreter: Grünecker Patent- und Rechtsanwälte PartG mbB

(56) Entgegenhaltungen:
- EP-A1- 1 855 372
- US-A1- 2007 007 845
- None

## Beschreibung

Die vorliegende Erfindung betrifft einen Gleichstromelektromotor nach dem Oberbegriff des Anspruchs 1 sowie ein Verfahren zur Herstellung eines derartigen Gleichstromelektromotors.

Aus dem Stand der Technik sind kleine Gleichstromelektromotoren mit eisenlosem Außenläufer bekannt. Der Rotor eines solchen Gleichstromelektromotors umfasst im Wesentlichen eine Welle, eine eisenlose hohlzylindrische Außenläuferwicklung mit mehreren Wicklungsanschlüssen sowie einen Kollektor mit mehreren Kollektordrähten, die lamellenförmig um den zylindrischen Kollektor angeordnet sind und mit den Wicklungsanschlüssen der Außenläuferwicklung elektrisch verbunden werden. Die Außenläuferwicklung ist üblicherweise einseitig am Außenumfang eines sogenannten Wicklungsträgers befestigt und wird durch diesen drehfest und koaxial zur Welle gehalten.

Ein derartiger Gleichstromelektromotor ist beispielsweise aus DE 10021392 C2 bekannt. Der Wicklungsträger des dort beschriebenen Elektromotors wird bei der Herstellung aus Kunststoff zusammen mit dem Kollektor auf die Welle aufgespritzt. Um das aus Wicklungsträger und Kollektor bestehende Kunststoffbauteil formschlüssig in Umfangsrichtung sowie axial zu sichern, weist die Welle im Bereich der Umspritzung einen gerändelten Bereich sowie eine Ringnut auf. Die Kollektordrähte, die auf der Kollektorhülse lamellenförmig angeordnet sind, sind im Bereich des Wicklungsträgers radial nach außen gebogen, verlaufen auf der Außenseite des Wicklungsträgers sternförmig und sind mit jeweils einem der Wicklungsanschlüsse verschweißt. Durch axiale Durchgangsöffnungen des Wicklungsträgers ist auf jeden Kollektordraht jeweils ein Chipkondensator aufgelötet, wobei die Chipkondensatoren durch einen Kurzschlussring aus Kupfer sternförmig zusammengeschaltet sind und somit eine Entstörschaltung zur Funkenunterdrückung und Erhöhung der Lebensdauer des Elektromotors darstellen. Es ist auch bekannt, die Entstörschaltung in Form einer sogenannten Kondensatorscheibe von hinten oder vorne auf den Wicklungsträger aufzusetzen. Derartige Kondensatorscheiben sind zumeist aus einer speziellen Keramik oder einer Leiterplatte hergestellt und weisen geeignete Kontaktflächen zur Kontaktierung jeweils eines Kollektordrahtes auf. Die Kondensatorscheiben umfassen jeweils eine Kapazität und einen Widerstand, die seriell oder parallel jeweils zwischen zwei benachbarte Kontaktflächen und damit zwischen zweibenachbarte Kollektordrähte geschaltet sind. Die Verwendung von Kondensatorscheiben ist beispielsweise aus DE 19740551 A1 bekannt.

Bei der Herstellung der beschriebenen Gleichstromelektromotoren müssen unterschiedliche Kundenwünsche berücksichtigt werden. So werden je nach Anwendung beispielsweise unterschiedliche Wellen benötigt, und/oder unterschiedliche Kollektordrähte für Edelmetall- oder Graphitbürstenkommutierung verwendet. Da sowohl Welle als auch Kollektordrähte bei den aus dem Stand der Technik bekannten Rotoren durch das Kunststoffspritzen des Wicklungsträgers und des Kollektors in einem Arbeitsgang umspritzt und damit endgültig zueinander positioniert werden, muss die gewünschte Rotorvariante bereits zu einem sehr frühen Zeitpunkt der Herstellung bekannt sein. Der bekannte Rotoraufbau bedingt daher eine geringe Flexibilität und lange Durchlaufzeiten bei der Herstellung. Ein weiterer Nachteil des bekannten Rotoraufbaus ist, dass der Wicklungsträger aus dem gespritzten Kunststoff für die erforderliche Stabilität und zur sicheren Übertragung des Motorantriebsmoments relativ dick ausgeführt sein muss, wodurch das Bauvolumen und insbesondere die Baulänge des Rotors und damit des gesamten Elektromotors relativ groß ist. Das benötigte Bauvolumen wird dabei umso größer, je mehr Anbauteile, wie beispielsweise Kondensatorscheiben zur Funkenentstörung, auf den Wicklungsträger aufgesetzt werden.

Ein Gleichstromelektromotor nach dem Oberbegriff des Anspruchs 1 ist beispielsweise aus EP 1855372 A1 bekannt. EP 1 855 372 A1 offenbart:
Gleichstromelektromotor, insbesondere mit kleinen Abmessungen, mit einem Wicklungsträger, und einer eisenlosen Aussenläuferwicklung mit mehreren Wicklungsanschlüssen, wobei die Aussenläuferwicklung an einem Ende über den Wicklungsträger drehfest mit der Welle verbindbar ist, der Wicklungsträger ein tragendes Bauteil darstellt, und die Aussenläuferwicklung elektrisch mit einem Kollektor verbindbar ist, wobei am Aussenumfang des Wicklungsträgers ein Isolationsring aus Kunststoff oder Keramik zur elektrischen Isolation gegen die Aussenläuferwicklung vorgesehen ist.

Aus US 2007007845 A1 ist ferner ein Elektrokleinmotor bekannt, dessen Kollektor eine aus Edelstahl oder Kupfer bestehende Trägerplatte aufweist, die auf die Welle des Rotors aufgepresst ist und gleichzeitig als Wicklungsträger dient. Die Kollektordrähte des Kollektors werden zunächst einzeln auf der Welle positioniert und anschließend mit einem Kunststoffring an der Welle fixiert.

Aufgabe der vorliegenden Erfindung ist es, einen Rotoraufbau anzugeben, der eine höhere Flexibilität bei der Herstellung ermöglicht und ein geringes Bauvolumen des Rotors gewährleistet. Ebenfalls Aufgabe der vorliegenden Erfindung ist es, ein Verfahren zur Herstellung eines Gleichstromelektromotors anzugeben, das im Vergleich zu den aus dem Stand der Technik bekannten Herstellungsverfahren eine höhere Flexibilität bei der Rotorherstellung ermöglicht.

Die Aufgabe wird durch die Merkmale des Anspruchs 1 der vorliegenden Erfindung gelöst. Dabei wird von einem Gleichstromelektromotor insbesondere mit kleinen Abmessungen ausgegangen, der eine Welle, einen Wicklungsträger, einen Kollektor und eine eisenlose Außenläuferwicklung mit mehreren Wicklungsanschlüssen umfasst. Die Außenläuferwicklung ist an einem Ende über den Wicklungsträger drehfest mit der Welle und zudem elektrisch direkt oder über eine Leiterplatte mit dem Kollektor verbunden. Die elektrischen und mechanischen Verbindungsstellen können mit einer Vergussmasse, wie z.B. einem Harz, vergossen sein. Dabei stellt der Wicklungsträger ein tragendes Bauteil dar. Erfindungsgemäß ist der Wicklungsträger eine Metallplatte, die eine zentrale Bohrung für die Verbindung mit der Welle aufweist. Weiterhin ist am Außenumfang der Metallplatte erfindungsgemäß ein Isolationsring aus Kunststoff oder Keramik zur elektrischen Isolation gegen die Außenläuferwicklung vorgesehen. Der isolierende Kunststoff kann dabei durch partielles Umspritzen aufgebracht werden. Dadurch, dass die Verbindung der Metallplatte mit der Welle durch eine Bohrung erreicht wird, können die beiden Bauteile aus einer Vielzahl unterschiedlicher Wellen und unterschiedlicher Metallplatten zu einer Baugruppe zusammengesetzt werden. Dies bedeutet eine hohe Flexibilität bei der Rotormontage, wobei auf individuelle Kundenwünsche eingegangen werden kann. Dabei ist es denkbar, dass die Bohrung der Metallplatte entsprechend dem Durchmesser der gewünschten Welle erst kurz vor der Montage vorgenommen wird. Alternativ kann auch ein einheitlicher Durchmesser der Bohrung festgelegt werden, wobei die unterschiedlichen Wellen zumindest im Bereich der Verbindung mit der Metallplatte jeweils den Durchmesser der Bohrung aufweisen. Die Metallplatte kann, insbesondere bei der Verwendung von Stahl, gegenüber den aus dem Stand der Technik bekannten Wicklungsträgern aus Kunststoff aufgrund der gegenüber Kunststoff besseren Materialeigenschaften, insbesondere einer hohen Festigkeit, extrem dünn ausgeführt werden, wobei die Stabilität gleich oder sogar besser ist. Dadurch wird ein geringes Bauvolumen und insbesondere eine geringe Baulänge des Rotors erreicht. Durch den Isolationsring aus Kunststoff oder Keramik am Außenumfang der Metallplatte werden Kurzschlüsse der Außenläuferwicklung vermieden. Die Metallplatte kann als Drehteil, durch Stanzen, Metallpulver-Spritzgießen oder Sintern hergestellt werden. Weiter weist der Kollektor erfindungsgemäß mehrere Kollektordrähte auf. Ferner ist erfindungsgemäß vorgesehen, dass die Metallplatte kraftschlüssig und stoffschlüssig mit der Welle verbunden ist. Hierdurch wird eine hohe Stabilität sowie eine sichere Übertragung des Drehmoments innerhalb des Rotors gewährleistet. Der Kraftschluss erfolgt durch Aufpressen der Metallplatte auf die Welle, wobei der Stoffschluss durch eine Schweißung erreicht wird. Vorteilhafterweise kommt dabei ein Laserschweißverfahren zum Einsatz, das einerseits kostengünstig ist und andererseits eine äußerst schnelle Montage des Rotors gewährleistet.

Das Verfahren zur Herstellung eines derartigen Gleichstromelektromotors umfasst gemäß Anspruch 10 erfindungsgemäß folgende aufeinanderfolgende Verfahrensschritte:
Zur Montage des Rotors wird zuerst die Metallplatte auf die Welle gepresst; Metallplatte und Welle werden anschließend verschweißt. Dabei kann je nach Kundenwunsch aus einer Vielzahl unterschiedlicher Wellen und Metallplatten als Wicklungsträger gewählt werden. In einem der nachfolgenden Schritte wird der Kollektor mit den Kollektordrähten als separate Baugruppe auf die Welle aufgesteckt. Auch hier sind je nach Kundenwunsch unterschiedliche Varianten, beispielsweise für Edelmetall- oder Graphitbürstenkommutierung möglich. Die Kollektordrähte werden nach Aufsetzen der Außenläuferwicklung über jeweils geeignete Kontaktflächen elektrisch mit einem zugehörigen Wicklungsanschluss verbunden. Dies kann durch Löten oder Schweißen geschehen. Anschließend werden die elektrischen und mechanischen Verbindungsstellen mit einer Vergussmasse vergossen. Dadurch wird zum einen die Stabilität erhöht, zum anderen dient die Vergussmasse zum Schutz der elektrischen Verbindungen gegenüber Kurzschlüssen, die beispielweise durch Kohlenstaub verursacht werden, der durch Abrieb der Graphitbürsten entsteht und sich sonst auf und zwischen den Kollektordrähten bzw. Wicklungsanschlüssen absetzen könnte. Durch das erfindungsgemäße Verfahren wird der erfindungsgemäße Gleichstromelektromotor hergestellt.

Weitere Ausgestaltungen der vorliegenden Erfindung sind Gegenstand der Unteransprüche.

In einer bevorzugten Ausführungsform weist die Metallplatte zumindest auf ihrer der Außenläuferwicklung abgewandten axialen Außenseite eine elektrisch isolierende Beschichtung oder einen elektrisch isolierenden Überzug auf. Dadurch werden Kurzschlüsse verhindert, die durch auf der Außenseite der Metallplatte verlaufende Kollektordrähte bzw. Wicklungsanschlüsse verursacht werden könnten.

Vorteilhafterweise ist auf die axiale Außenseite der Metallplatte eine Leiterplatte mit einer Entstörschaltung zur Reduktion der Funkenbildung bei der Kommutierung aufgesetzt. Derartige Entstörschaltungen verlängern die Lebensdauer eines bürstenkommutierten Motors beträchtlich und reduzieren gleichzeitig die elektromagnetische Abstrahlung beim Betrieb des Motors. Vorteilhafterweise weist die Leiterplatte mehrere in Umfangsrichtung verteilte, voneinander getrennte elektrische Kontaktflächen zur Kontaktierung jeweils eines Wicklungsanschlusses und eines zugehörigen Kollektordrahtes auf. Hierdurch wird die Montage und insbesondere die elektrische Kontaktierung von Kollektordrähten und Wicklungsanschlüssen erheblich erleichtert.

In einer besonders bevorzugten Ausführungsform ist die Leiterplatte in axialer ,Richtung mehrschichtig aufgebaut. Dadurch können Schaltungen, die auf inneren Schichten der Leiterplatte aufgebracht sind von den äußeren Schichten der Leiterplatte geschützt in die Leiterplatte integriert werden. Als besonders vorteilhaft hat es sich herausgestellt, wenn die elektrischen Bauelemente der Entstörschaltung auf eine innenliegende Schicht der mehrschichtigen Leiterplatte mittels der sogenannten "Embedded"-Technologie integriert sind, und somit durch die äußeren Schichten der Leiterplatte geschützt sind. Dadurch ist es möglich auch bei Kleinmotoren mit einem Durchmesser kleiner als 13 mm eine Entstörschaltung zu integrieren. Zusätzlich können durch eine Anordnung der Bauelemente in den Innenlagen der Leiterplatte größere Gehäuseformen, die mehr Verlustleistung zulassen, eingesetzt werden, wodurch deren Lebensdauer verlängert wird. Auch wird durch die bessere Wärmeleitfähigkeit des Platinenmaterials gegenüber Luft die entstehende Verlustwärme besser abgeleitet. Im Gegensatz zum Einsatz von Kondensatorscheiben, deren Kapazität durch die Fläche und den Lagenaufbau bestimmt wird, kann bei einer bestückten Leiterplatte die Beschaltung und Dimensionierung der Bauelemente, z.B. von Widerständen und Kondensatoren, optimal auf die Wicklung und den Motor abgestimmt werden.

In einer weiteren bevorzugten Ausführungsform der vorliegenden Erfindung ist auf die der Außenläuferwicklung abgewandte axiale Außenseite der Metallplatte ein, aus einem Kupferblech ausgestanzter Kontaktstern aufgesetzt. Die Strahlen dieses Kontaktsterns sind vorteilhafterweise durch zumindest einen eingespritzten Kunststoffring voneinander beabstandet. Jeder Strahl des Kontaktsterns dient zur Kontaktierung eines Wicklungsanschlusses sowie des jeweils zugehörigen Kollektordrahtes. Diese Ausführungsform erleichtert die Montage und eignet sich im Besonderen für hohe Stromstärken. Vorteilhafterweise sind die Strahlen des Kontaktsterns durch eine Entstörschaltung zur Reduktion der Funkenbildung bei der Kommutierung miteinander verbunden. Dabei wird eine gute Automatisierung der Herstellung erreicht, wenn die Entstörschaltung auf einer Leiterplatte untergebracht ist. Das Grundmaterial der Leiterplatte, auf welcher die Endstörschaltung und die elektrischen Bauelemente aufgebracht sind ist vorzugsweise ein glasfaserverstärkter Duromer wie z.B. FR4. Alternativ eignet sich auch Keramik als Grundmaterial.

In einer weiteren bevorzugten Ausführungsform ist die Metallplatte zur Vermeidung von Kurzschlüssen und zur elektrischen Abschirmung mit Kunststoff umspritzt.

Ausführungsbeispiele der vorliegenden Erfindung werden im Folgenden anhand von Zeichnungen näher erläutert. Es zeigen:
**Fig. 1a****,** ein erstes Beispiel eines Rotors eines Gleichstromelektromotors,
**Fig. 1b****,** den Rotor aus Fig. 1a mit Abdeckung des Verbindungsbereichs durch eine Vergussmasse im Bereich der Verbindung zwischen Außenläuferwicklung und Kollektor,
Fig. 2, die Leiterplatte des Rotors aus den Fig. 1a und 1b in einer Detailansicht,
Fig. 3, den Kollektor des Rotors aus den Fig. 1a und 1b in einer Detailansicht,
Fig. 4, eine alternative Ausführung des Kollektors aus Fig. 3,
Fig. 5, ein weiteres Beispiel eines Rotors eines Gleichstromelektromotors,
Fig. 6, ein Ausführungsbeispiel eines Rotors eines erfindungsgemäßen Gleichstromelektromotors,
Fig. 7, ein weiteres Ausführungsbeispiel eines Rotors eines erfindungsgemäßen Gleichstromelektromotors,
Fig. 8, den Kupferstern des Rotors aus Fig. 7 zur Kontaktierung der Wicklungsanschlüsse und Kollektordrähte während der Herstellung,
Fig. 9, den Kupferstern aus Fig. 8 im fertig bearbeiteten Zustand.

Im Folgenden werden mit gleichen Bezugszeichen gleiche Teile bezeichnet.

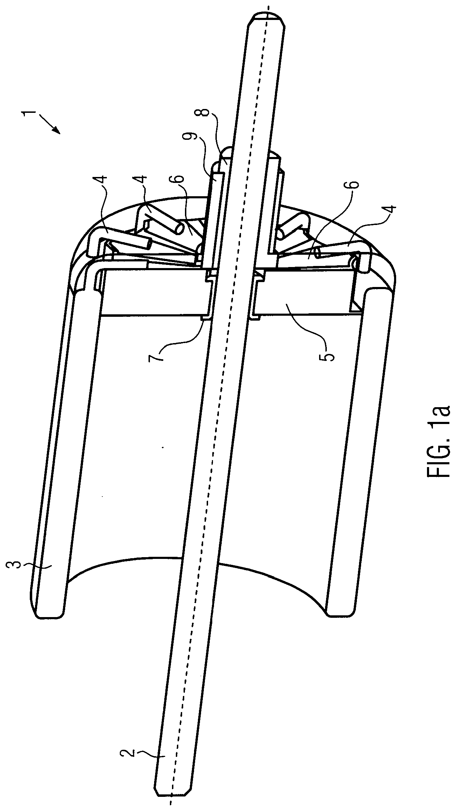

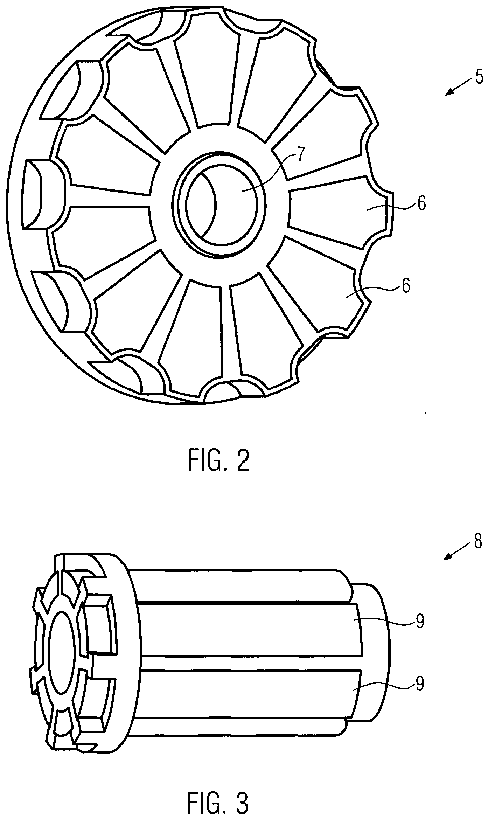

Fig. 1a zeigt einen Längsschnitt durch einen Rotor 1 eines Gleichstromelektromotors, der als Glockenankerrotor für Motoren kleiner Baugröße mit Metall- oder Graphitbürstenkommutierung ausgeführt ist. Der Rotor 1 besteht im Wesentlichen aus einer Welle 2, einer eisenlosen Außenläuferwicklung 3 und einem Kollektor 8. Die Außenläuferwicklung 3 ist an einem Ende am Außenumfang einer Leiterplatte 5 befestigt, die ihrerseits über eine Metallnabe 7 mit der Welle verbunden ist. Die Leiterplatte 5 stellt somit ein tragendes Bauteil dar und ist aus glasfaserverstärktem Epoxydharz gefertigt. Die üblicherweise als Kupferdraht gewickelte Außenläuferwicklung 3 wird über die Leiterplatte 5 drehfest zur Welle 2 und koaxial zu dieser gehalten. Eine Detailansicht der Leiterplatte 5 ist in Fig. 2 abgebildet, Fig. 3 zeigt die Detailansicht des Kollektors 8. Die Metallnabe 7 der Leiterplatte 5 ist aus Stahl gefertigt und auf die ebenfalls aus Stahl bestehende Welle 2 des Rotors 1 aufgepresst und mit dieser verschweißt. Der hülsenförmige Kollektor 8 ist in seinem Durchmesser bedeutend kleiner als die Leiterplatte 5 und weist auf seinem Außenumfang die lamellenförmig angeordneten Kollektordrähte 9 auf. Jeder Kollektordraht 9 ist über eine Kupferfläche 6 der Leiterplatte 5 elektrisch mit einem Wicklungsanschluss 4 der Außenläuferwicklung 3 verbunden. Die Kupferflächen 6 der Leiterplatte 5 sind dazu sternförmig und voneinander getrennt auf der Außenseite der Leiterplatte 5 angeordnet. Zur Montage des Rotors 1 werden zunächst Welle 2, Leiterplatte 5 und Kollektor 8 entsprechend den Kundenwünschen aus einer Vielzahl alternativer Bauteile ausgewählt. Die Leiterplatte 5 umfasst zu diesem Zeitpunkt bereits die eingepresste und verbördelte Stahlnabe 7. Der Kollektor 8 ist als eigene Baugruppe bereits mit den gewünschten Kollektordrähten 9 bestückt. Zunächst wird nun die Leiterplatte 5 auf die Welle 2 aufgepresst und mit dieser verschweißt. Im nächsten Schritt wird der hohlzylindrische Kollektor 8 über die Welle 2 bis zur Leiterplatte 5 aufgeschoben, sodass ein Kontakt zwischen den Kollektordrähten 9 und den Kupferflächen 6 der Leiterplatte 5 besteht. Die Kollektordrähte 9 und die Kupferflächen 6 werden anschließend miteinander verlötet. Dann wird die hohlzylindrische Außenläuferwicklung 3 auf die Leiterplatte 5 aufgesetzt, wobei die Wicklungsanschlüsse 4 der Außenläuferwicklung 3 ebenfalls mit den Kupferflächen 6 der Leiterplatte verlötet werden.

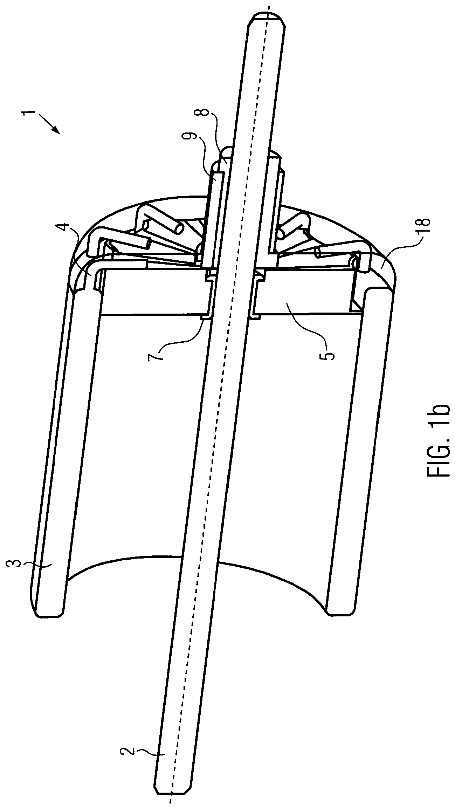

Fig. 1b zeigt, dass Leiterplatte sowie Anschlüsse in einem letzten Schritt durch eine Vergussmasse 18 abgedeckt werden, die zum einen die Stabilität erhöht und zum anderen das Auftreten von Kurzschlüssen verhindert, die durch Partikel verursacht werden können, die sich auf den Wicklungsanschlüssen 4, den Kupferflächen 6 oder den Kollektordrähten 9 im Bereich der Leiterplatte 5 absetzen können.

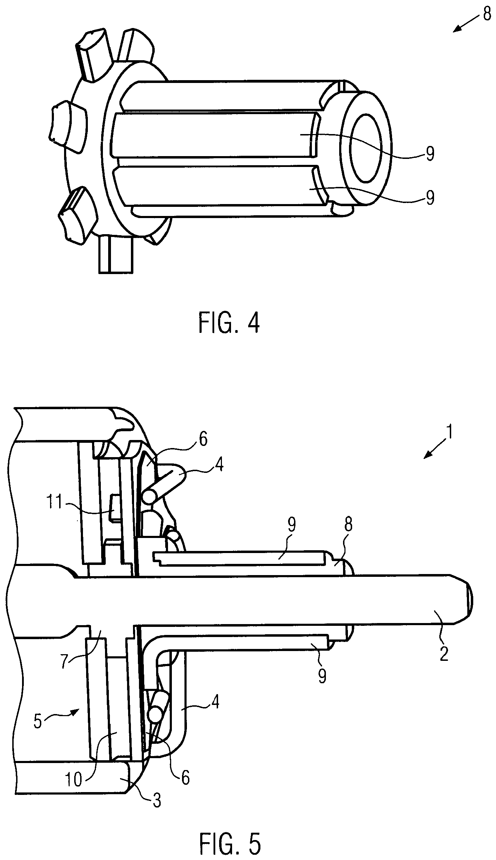

Fig. 4 ist eine alternative Ausführung des Kollektors 8 mit sternförmig radial nach außen gebogenen Kollektordrähten 9. Durch die sternförmig nach außen gebogenen Kollektordrähte 9 wird die Kontaktfläche zwischen Kollektordraht 9 und Kupferfläche 6 der Leiterplatte 5 vergrößert, was den elektrischen Kontakt verbessert.

Fig. 5 zeigt ein alternatives Beispiel eines Rotors eines Gleichstromelektromotors. Es handelt sich wiederum um einen Glockenankerrotor für Rotoren kleiner Baugröße mit Metall- oder Graphitbürstenkommutierung. Im Gegensatz zum Beispiel der Figuren 1a und 1b ist die Leiterplatte 5 mehrschichtig aufgebaut. Eine innere Lage 10 der Leiterplatte 5 ist mit den Bauelementen zur Reduktion der Funkenbildung bei der Kommutierung, sowie zur Verminderung der elektromagnetischen Abstrahlung im Betrieb des Elektromotors bestückt. Die Entstörschaltung besteht aus den elektrischen Bauteilen 11, die jeweils aus einem Kondensator und einem Widerstand bestehen, welche seriell oder parallel zwischen die Kupferflächen 6 der äußeren Schicht der Leiterplatte 5 geschaltet sind. Die Stahlnabe 7 der Leiterplatte 5 wird beim Herstellungsprozess der Leiterplatte 5 mit ihrer radial verlaufenden Feder in den mehrschichtigen Aufbau der Leiterplatte 5 eingebettet. In diesem Beispiel kommt der alternative Kollektor 8 aus Fig. 4 zum Einsatz. Auch hier werden Leiterplatte und Anschlüsse von außen mit einer Vergussmasse abgedeckt, um die Stabilität zu erhöhen und Kurzschlüsse auszuschließen.

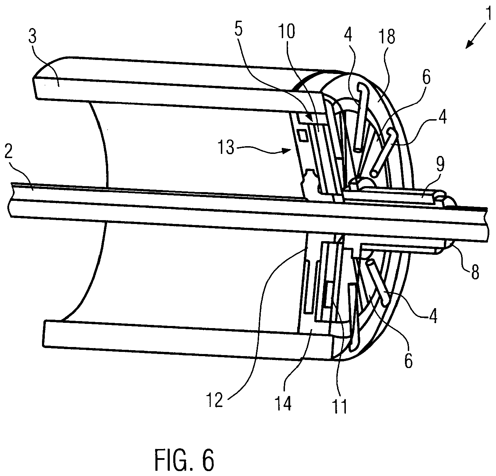

Fig. 6 zeigt ein Ausführungsbeispiel eines Rotors eines erfindungsgemäßen Gleichstromelektromotors im Längsschnitt. Es handelt sich hierbei um einen Glockenankerrotor kleiner Baugröße für Metall- oder Graphitbürstenkommutierung. Der Rotor 1 besteht im Wesentlichen aus einer Welle 2, einer Außenläuferwicklung 3 und einem Kollektor 8. Die Außenläuferwicklung 3 ist mit einem Ende am Außenumfang einer Metallplatte 12 befestigt und über diese drehfest und koaxial zur Welle 2 mit der Welle 2 verbunden. Um Kurzschlüsse in der Außenläuferwicklung 3 zu vermeiden, ist die aus Stahl bestehende Metallplatte 12 auf beiden Seiten sowie am Außenumfang mit einer Kunststoffumspritzung 14 elektrisch isoliert. Um den Verbund zwischen Metallplatte 12 und Kunststoffumspritzung 14 zu verbessern, weist die Metallplatte 12 axiale Durchtrittsöffnungen 13 in Form von über den Umfang verteilten Bohrungen auf, die ebenfalls durch die Kunststoffumspritzung 14 ausgefüllt sind. Von außen ist auf die Metallplatte 12 bzw. deren Kunststoffumspritzung 14 eine Leiterplatte 5 mit einer Entstörschaltung zur Reduktion der Funkenbildung bei der Kommutierung aufgesetzt. Die Leiterplatte 5 ist mehrschichtig aufgebaut. Die elektrischen Bauelemente der Entstörschaltung sind auf eine innenliegende Schicht 10 der mehrschichtigen Leiterplatte 5 mittels der sogenannten "Embedded"-Technologie integriert. Die Leiterplatte 5 besteht aus einem glasfaserverstärktem Duromer auf welchen elektrische Bauteile 11, bestehend jeweils aus einem Kondensator und einem Widerstand, aufgebracht sind. Kondensator und Widerstand sind jeweils seriell oder parallel zwischen die Kupferflächen 6 der Leiterplatte 5 geschaltet. Die sternförmig auf der Vorderseite der Leiterplatte 5 verteilten und voneinander beabstandeten Kupferflächen 6 dienen jeweils zur Kontaktierung eines Wicklungsanschlusses 4 der Außenläuferwicklung 3 sowie eines zugehörigen Kollektordrahtes 9 des Kollektors 8. Die Kollektordrähte 9 sind lamellenförmig über den Umfang des hohlzylindrisch ausgeführten Kollektors 8 verteilt. Zur Montage des Rotors 1 werden Welle 2, Metallplatte 12, Leiterplatte 5 und Kollektor 8 zunächst nach den Kundenwünschen ausgewählt. Die Metallplatte 12 wird über die zentrale Bohrung der Metallplatte sodann auf die Welle 2 aufgepresst und mit dieser verschweißt. Im nächsten Schritt werden Leiterplatte 5 und Kollektor 8 auf die Welle aufgesetzt, wobei die Kollektordrähte 9 jeweils mit einer der Kupferflächen 6 der Leiterplatte 5 verlötet werden. Im nächsten Schritt wird die hohlzylindrische Außenläuferwicklung 3 des Glockenankerrotors auf die Metallplatte 12 aufgesetzt. Die Wicklungsanschlüsse 4 der Außenläuferwicklung 3 werden sodann ebenfalls jeweils mit einer der Kupferflächen 6 der Leiterplatte 5 verlötet. Auch hier wird von außen eine Vergussmasse aufgebracht, welche die mechanischen Verbindungen stabilisiert und die Leiterplatte 5, insbesondere die elektrischen Bauteile 11, sowie die elektrischen Anschlüsse gegen Beschädigung und Kurzschluss schützt.

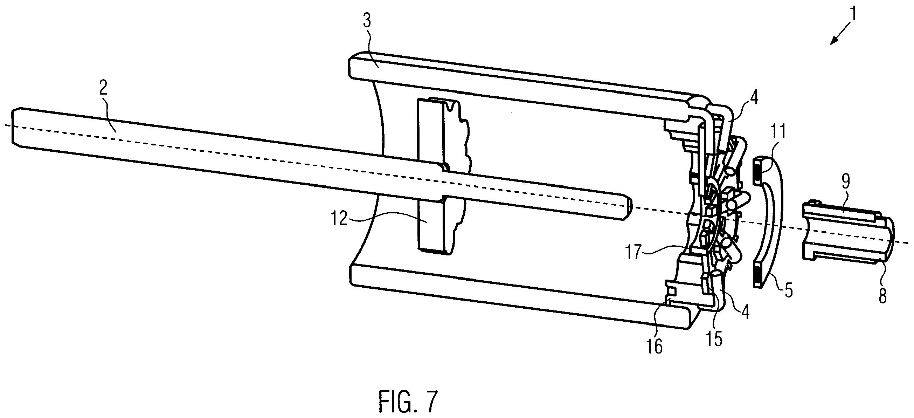

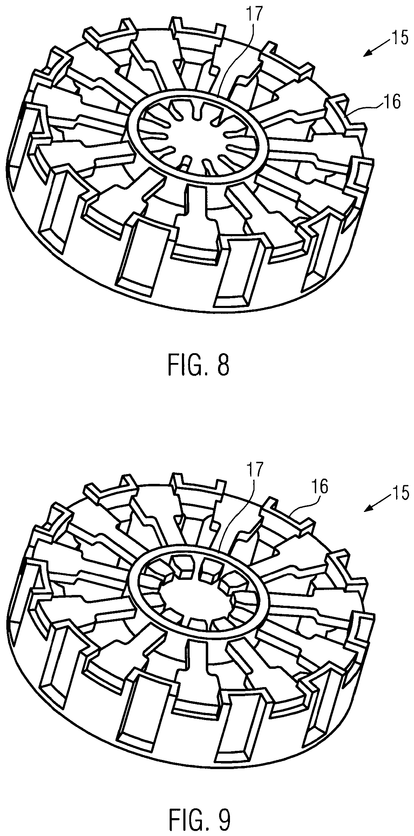

Fig. 7 zeigt ein weiteres Ausführungsbeispiel eines Rotors eines erfindungsgemäßen Gleichstromelektromotors als Längsschnitt in einer Explosionsdarstellung. Ähnlich wie in dem Ausführungsbeispiel aus Fig. 6 wird die Außenläuferwicklung 3 über eine Metallplatte 12 drehfest und konzentrisch zur Welle 2 gehalten. Die Metallplatte 12 weist jedoch keine Kunststoffumspritzung auf. Die Außenläuferwicklung 3 wird gegenüber der Metallplatte 12 mit Hilfe eines äußeren Kunststoffrings 16 elektrisch isoliert. Eine Verzahnung am Außenumfang der Metallplatte 12 greift in eine Innenverzahnung des äußeren Kunststoffrings 16 ein, wodurch eine sichere Übertragung des Drehmoments von der Außenläuferwicklung 3 auf die Metallplatte 12 und von dieser auf die Welle 2 gewährleistet ist. Die Metallplatte 12 ist mit ihrer zentralen Bohrung auf die Welle 2 aufgepresst und mit dieser verschweißt. Der äußere Kunststoffring 16 ist in einen Kupferstern 15 eingespritzt, der in den Fig. 8 und 9 näher abgebildet ist. Der Kupferstern 15 wird zur Herstellung aus einem Kupferblech ausgestanzt, wobei die nach außen zeigenden Strahlen des Kupfersterns 15 in der Mitte zunächst verbunden bleiben. Auf dem Kupferstern 15 werden sodann der äußere Kunststoffring 16 sowie der innere Kunststoffring 17 aufgespritzt, durch welche die Strahlen des Kupfersterns 15 in Position gehalten werden. Dieser Zustand des Kupfersterns 15 ist in Fig. 8 abgebildet. Da die Strahlen des Kupfersterns 15 durch die beiden Kunststoffringe 16 und 17 in ihrer Position fixiert sind, kann nun der mittlere Bereich des Sterns, der die Strahlen miteinander verbindet, ausgestanzt werden. Dieser Zustand ist in Fig. 9 abgebildet. Die Strahlen berühren nun einander nicht mehr und sind somit nicht elektrisch leitend miteinander verbunden. Zur Montage des Rotors 1 wird die Außenläuferwicklung 3 auf den Kupferstern 15 aufgesetzt, wobei die Wicklungsanschlüsse 4 der Außenläuferwicklung 3 jeweils mit einem Strahl des Kupfersterns 15 elektrisch kontaktiert werden. Beim Zusammenstecken des Kupfersterns 15 und der Außenläuferwicklung 3 mit der bereits auf der Welle 2 montierten Stahlplatte 12 sorgt der innere Kunststoffring 17 des Kupfersterns 15 dafür, dass die Strahlen des Kupfersterns 15 von der Metallplatte 12 beabstandet sind und somit nicht durch die Metallplatte 12 kurzgeschlossen werden. Beim fertig montierten Rotor 1 sind die Kollektordrähte 9 des hohlzylindrisch ausgeführten Kollektors 8 ebenfalls jeweils mit einem Strahl des Kupfersterns 15 verbunden. Zur Funkenentstörung kann auf den Kupferstern 15 eine Leiterplatte 5 mit den elektrischen Bauelementen 11 einer Endstörschaltung aufgesetzt werden.

## Patentansprüche

1. Gleichstromelektromotor, insbesondere mit kleinen Abmessungen, mit einer Welle (2), einem Wicklungsträger, einem Kollektor (8), und einer eisenlosen Außenläuferwicklung (3) mit mehreren Wicklungsanschlüssen (4), wobei die Außenläuferwicklung (3) an einem Ende über den Wicklungsträger drehfest mit der Welle (2) verbunden ist, der Wicklungsträger ein tragendes Bauteil darstellt, und die Außenläuferwicklung (3) elektrisch mit dem Kollektor (8) verbunden ist, wobei der Kollektor (8) mehrere Kollektordrähte (9) aufweist, wobei der Wicklungsträger eine Metallplatte (12) ist, die eine zentrale Bohrung für die Verbindung mit der Welle (2) aufweist, wobei am Außenumfang der Metallplatte (12) ein Isolationsring (14; 16) aus Kunststoff oder Keramik zur elektrischen Isolation gegen die Außenläuferwicklung (3) vorgesehen ist, wobei die Metallplatte (12) kraftschlüssig und stoffschlüssig mit der Welle (2) verbunden ist, und wobei die Metallplatte (12) auf die Welle (2) aufgepresst und mit der Welle (2) verschweißt ist.

2. Gleichstromelektromotor nach Anspruch 1, **dadurch gekennzeichnet, dass** die Metallplatte (12) zumindest auf ihrer der Außenläuferwicklung (3) abgewandten axialen Außenseite eine elektrisch isolierende Beschichtung oder einen elektrisch isolierenden Überzug (14) aufweist.

3. Gleichstromelektromotor nach Anspruch 2, **dadurch gekennzeichnet, dass** auf die axiale Außenseite der Metallplatte (12) eine Leiterplatte (5) mit einer Entstörschaltung zur Reduktion der Funkenbildung bei der Kommutierung aufgesetzt ist, wobei die Leiterplatte (5) mehrere in Umfangsrichtung verteilte, voneinander getrennte elektrische Kontaktflächen (6) zur Kontaktierung jeweils eines Wicklungsanschlusses (4) und eines zugehörigen Kollektordrahtes (9) aufweist.

4. Gleichstromelektromotor nach Anspruch 3, **dadurch gekennzeichnet, dass** die Leiterplatte (5) in axialer Richtung mehrschichtig aufgebaut ist.

5. Gleichstromelektromotor nach Anspruch 4, **dadurch gekennzeichnet, dass** die elektrischen Bauelemente der Entstörschaltung auf eine innenliegende Schicht (10) der mehrschichtigen Leiterplatte (5) integriert sind.

6. Gleichstromelektromotor nach einem der Ansprüche 1 bis 2, **dadurch gekennzeichnet, dass** auf die der Außenläuferwicklung (3) abgewandten axialen Außenseite der Metallplatte (12) ein aus einem Kupferblech ausgestanzter Kontaktstern (15) aufgesetzt ist, dessen Strahlen durch zumindest einen eingespritzten Kunststoffring (16, 17) voneinander beabstandet gehalten sind, wobei jeder Strahl des Kontaktsterns (15) zur Kontaktierung eines Wicklungsanschlusses (4) sowie des jeweils zugehörigen Kollektordrahtes (9) dient.

7. Gleichstromelektromotor nach Anspruch 6, **dadurch gekennzeichnet, dass** die Strahlen des Kontaktsterns (15) durch eine Entstörschaltung zur Reduktion der Funkenbildung bei der Kommutierung miteinander verbunden sind, wobei die Entstörschaltung auf einer Leiterplatte (5) untergebracht ist.

8. Gleichstromelektromotor nach Anspruch 3, 4, 5 oder 7, **dadurch gekennzeichnet, dass** das Grundmaterial der Leiterplatte (5) ein glasfaserverstärkter Duromer ist.

9. Gleichstromelektromotor nach einem der Ansprüche 1 bis 8, **dadurch gekennzeichnet, dass** die Metallplatte (12) mit Kunststoff umspritzt ist.

10. Verfahren zur Herstellung eines Gleichstromelektromotors nach einem der Ansprüche 1 bis 9, wobei der Gleichstromelektromotor aufweisend eine Welle (2), einen Wicklungsträger, einen Kollektor (8), und eine eisenlosen Außenläuferwicklung (3) mit mehreren Wicklungsanschlüssen (4), wobei die Außenläuferwicklung (3) an einem Ende über den Wicklungsträger drehfest mit der Welle (2) verbunden ist, der Wicklungsträger ein tragendes Bauteil darstellt, und die Außenläuferwicklung (3) elektrisch mit dem Kollektor (8) verbunden ist, wobei der Kollektor (8) mehrere Kollektordrähte (9) aufweist, wobei der Wicklungsträger eine Metallplatte (12) ist, die eine zentrale Bohrung für die Verbindung mit der Welle (2) aufweist, und wobei am Außenumfang der Metallplatte (12) ein Isolationsring (14; 16) aus Kunststoff oder Keramik zur elektrischen Isolation gegen die Außenläuferwicklung (3) vorgesehen ist, durch das besagte Verfahren hergestellt wird, wobei zur Montage des Rotors (1) zuerst die Metallplatte (12) auf die Welle (2) gepresst wird, und Metallplatte (12) und Welle (2) anschließend verschweißt werden, der Kollektor (8) mit den Kollektordrähten (9) in einem der nachfolgenden Schritte als separate Baugruppe auf die Welle (2) aufgesteckt wird, die Kollektordrähte (9) nach Aufsetzen der Außenläuferwicklung (3) über jeweils geeignete Kontaktflächen elektrisch mit einem zugehörigen Wicklungsanschluss (4) verbunden werden, und anschließend die elektrischen und mechanischen Verbindungsstellen mit einer Vergussmasse vergossen werden.

## Claims

1. Electric direct current motor, in particular of small dimensions, having a shaft (2), a winding support, a collector (8), and an air-cored outer rotor winding (3) with several winding terminations (4), wherein the outer rotor winding (3) is at one end connected to the shaft (2) via the winding support in a torque-proof manner, the winding support represents a bearing component, and the outer rotor winding (3) is electrically connected to the collector (8), wherein the collector (8) comprises several collector wires (9), wherein the winding support is a metallic plate (12) comprising a central bore for the connection with the shaft (2), wherein an insulation ring (14; 16) of plastics or ceramics is provided at the outer periphery of the metallic plate (12) for electric insulation from the outer rotor winding (3), wherein the metallic plate (12) is connected to the shaft (2) by frictional and material bonding connections, wherein the metal plate (12) is pressed onto the shaft (2) and is welded to the shaft (2).

2. Electric direct current motor according claim 1, **characterized in that** the metallic plate (12) comprises, at least at its axial outer side opposed to the outer rotor winding (3), an electrically insulating coating or an electrically insulating coat (14).

3. Electric direct current motor according to claim 2, **characterized in that** a printed circuit board (5) with an interference suppression circuit for reducing sparking during commutation is placed on the axial outer side of the metallic plate (12), wherein the printed circuit board (5) comprises several separate electric contact surfaces (6) distributed in the circumferential direction for contacting one winding termination (4) and one corresponding collector wire (9) each.

4. Electric direct current motor according to claim 3, **characterized in that** the printed circuit board (5) has a multilayer design in the axial direction.

5. Electric direct current motor according to claim 4, **characterized in that** the electric components of the interference suppression circuit are integrated on an inner layer (10) of the multilayer printed circuit board (5).

6. Electric direct current motor according to one of claims 1 to 2, **characterized in that** a contact star (15) punched out of sheet copper is placed onto the axial outer side of the metallic plate (12) opposed to the outer rotor winding (3), wherein the beams of the contact star are held spaced apart by at least one injected plastic ring (16, 17), wherein each beam of the contact star (15) serves for contacting one winding termination (4) and the respective corresponding collector wire (9).

7. Electric direct current motor according to claim 6, **characterized in that** the beams of the contact star (15) are connected to each other by an interference suppression circuit for reducing sparking during commutation, wherein the interference suppression circuit is accommodated on a printed circuit board (5).

8. Electric direct current motor according to claim 3, 4, 5 or 7, **characterized in that** the basic material of the printed circuit board (5) is glass-fiber reinforced thermosetting plastics.

9. Electric direct current motor according to one of claims 1 to 8, **characterized in that** the metallic plate (12) is coated with plastics.

10. Method for the manufacture of an electric direct current motor according to one of claims 1 to 9, wherein the electric direct current motor
having a shaft (2), a winding support, a collector (8), and an air-cored outer rotor winding (3) with several winding terminations (4), wherein the outer rotor winding (3) is at one end connected to the shaft (2) via the winding support in a torque-proof manner, the winding support representing a bearing component, and the outer rotor winding (3) being electrically connected to the collector (8), wherein the collector (8) comprises several collector wires (9), wherein the winding support is a metallic plate (12) comprising a central bore for the connection with the shaft (2), and wherein an insulation ring (14; 16) of plastics or ceramics is provided at the outer periphery of the metallic plate (12) for electric insulation from the outer rotor winding (3)
is produced by said method, wherein for assembling the rotor (1), first the metallic plate (12) is pressed onto the shaft (2), and the metallic plate (12) and the shaft (2) are subsequently welded to each other, in one of the following steps, the collector (8) with the collector wires (9) is placed as a separate unit onto the shaft (2), the collector wires (9) are electrically connected to a pertaining winding termination (4) via respective suited contact surfaces after the outer rotor winding (3) has been placed, and then the electrical and mechanical connection points are cast with a casting compound.

## Revendications

1. Moteur électrique à courant continu, en particulier de petites dimensions, avec un arbre (2), un support d'enroulement, un collecteur (8) et un enroulement d'induit extérieur (3) sans fer muni de plusieurs raccords d'enroulement (4), dans lequel l'enroulement d'induit extérieur (3) est relié à l'arbre (2) de manière solidaire en rotation par l'intermédiaire du support d'enroulement au niveau d'une extrémité, le support d'enroulement constitue un élément porteur, et l'enroulement d'induit extérieur (3) est relié électriquement au collecteur (8), dans lequel le collecteur (8) présente plusieurs fils de collecteur (9), dans lequel le support d'enroulement est une plaque métallique (12) présentant un alésage central destiné à la liaison avec l'arbre (2), dans lequel une bague isolante (14; 16) en matière plastique ou en céramique est prévue sur le périmètre extérieur de la plaque métallique (12) afin de procurer une isolation électrique par rapport à l'enroulement d'induit extérieur (3), dans lequel la plaque métallique (12) est reliée à l'arbre (2) par complémentarité de force et de matière, et dans lequel la plaque métallique (12) est emmanchée sur l'arbre (2) et est soudée à l'arbre (2).

2. Moteur électrique à courant continu selon la revendication 1, **caractérisé en ce que** la plaque métallique (12) présente un revêtement électriquement isolant ou un enduit électriquement isolant (14) au moins sur son côté extérieur axial opposé à l'enroulement d'induit extérieur (3).

3. Moteur électrique à courant continu selon la revendication 2, **caractérisé en ce qu'**une plaque de circuit imprimé (5) munie d'un circuit de suppression d'interférences permettant de réduire la formation d'étincelles lors de la commutation est placée sur la face extérieure axiale de la plaque métallique (12), dans lequel la plaque de circuit imprimé (5) présente plusieurs surfaces de contact électrique (6), réparties dans la direction circonférentielle et séparées les unes des autres, afin d'établir un contact entre respectivement un raccord d'enroulement (4) et un fil de collecteur (9) associé.

4. Moteur électrique à courant continu selon la revendication 3, **caractérisé en ce que** la plaque de circuit imprimé (5) présente une structure en plusieurs couches dans la direction axiale.

5. Moteur électrique à courant continu selon la revendication 4, **caractérisé en ce que** les composants électriques du circuit de suppression d'interférences sont intégrés sur une couche intérieure (10) de la plaque de circuit imprimé multicouche (5).

6. Moteur électrique à courant continu selon l'une quelconque des revendications 1 et 2, **caractérisé en ce qu'**une étoile de contact (15), découpée dans une feuille de cuivre et dont les rayons sont maintenus espacés les uns des autres grâce à au moins une bague en matière plastique (16, 17) injectée, est placée sur la face extérieure axiale, opposée à l'enroulement d'induit extérieur (3), de la plaque métallique (12), dans lequel chaque rayon de l'étoile de contact (15) sert à établir un contact entre un raccord d'enroulement (4) et le fil de collecteur (9) respectivement associé.

7. Moteur électrique à courant continu selon la revendication 6, **caractérisé en ce que** les rayons de l'étoile de contact (15) sont reliés entre eux grâce à un circuit de suppression d'interférences permettant de réduire la formation d'étincelles lors de la commutation, dans lequel le circuit de suppression d'interférences est logé sur une plaque de circuit imprimé (5).

8. Moteur électrique à courant continu selon la revendication 1, 2 ou 3, **caractérisé en ce que** le matériau de base de la plaque de circuit imprimé (5) est un matériau duromère renforcé par de la fibre de verre.

9. Moteur électrique à courant continu selon l'une quelconque des revendications 1 à 8, **caractérisé en ce que** la plaque métallique (12) est surmoulée avec une matière plastique.

10. Procédé de fabrication d'un moteur électrique à courant continu selon l'une quelconque des revendications 1 à 9, dans lequel le moteur électrique à courant continu présentant un arbre (2), un support d'enroulement, un collecteur (8) et un enroulement d'induit extérieur sans fer (3) muni de plusieurs raccords d'enroulement (4), dans lequel l'enroulement d'induit extérieur (3) est relié de manière solidaire en rotation à l'arbre (2) par l'intermédiaire du support d'enroulement au niveau d'une extrémité, le support d'enroulement constitue un élément porteur et l'enroulement d'induit extérieur (3) est relié électriquement au collecteur (8), dans lequel le collecteur (8) présente plusieurs fils de collecteur (9), dans lequel le support d'enroulement est une plaque métallique (12) présentant un alésage central destiné à la liaison avec l'arbre (2), et dans lequel une bague isolante (14 ; 16) en matière plastique ou en céramique est prévue sur le périmètre extérieur de la plaque métallique (12) afin de procurer une isolation électrique par rapport à l'enroulement d'induit extérieur (3), est fabriqué grâce audit procédé, dans lequel la plaque métallique (12) est d'abord emmanchée sur l'arbre (2) afin d'assembler le rotor (1), et la plaque métallique (12) et l'arbre (2) sont ensuite soudés, le collecteur (8) muni des fils de collecteur (9) est enfiché sur l'arbre (2) sous forme de module séparé au cours de l'une des étapes qui s'ensuivent, les fils de collecteur (9) sont reliés électriquement à un raccord d'enroulement (4) associé par l'intermédiaire de surfaces de contact respectivement appropriées après mise en place de l'enroulement d'induit extérieur (3), et les points de liaison électriques et mécaniques sont ensuite enrobés dans une masse d'enrobage.
